(19) Europäisches Patentamt

European Patent Office

Office européen des brevets

(11) **EP 0 663 355 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(51) Int. Cl.$^6$: **B65G 45/12**

(21) Anmeldenummer: **94119738.6**

(22) Anmeldetag: **14.12.1994**

(54) **Vorrichtung zum Reinigen von Förderbändern mit Spannbüchse, Spannring und Spannhebel**

Conveyor belt cleaning apparatus with spring coller, tension ring and tension lever

Dispositif de nettoyage pour bandes de convoyage avec douille de serrage, collier tendeur et levier de serrage

(84) Benannte Vertragsstaaten:
**AT BE CH DE DK ES FR GB GR IE IT LI LU MC NL PT SE**

(30) Priorität: **14.01.1994 DE 4400989**

(43) Veröffentlichungstag der Anmeldung:
**19.07.1995 Patentblatt 1995/29**

(73) Patentinhaber: **Jostes, Hans, Dipl.-Ing.**
**59174 Kamen (DE)**

(72) Erfinder: **Jostes, Hans, Dipl.-Ing.**
**59174 Kamen (DE)**

(74) Vertreter: **Eichelbaum, Lambert, Dipl.-Ing.**
**Krüppeleichen 6**
**45659 Recklinghausen (DE)**

(56) Entgegenhaltungen:
**EP-A- 0 157 246**　　　　**GB-A- 2 221 887**
**GB-A- 2 222 132**

**Beschreibung**

Die Erfindung betrifft eine Vorrichtung zum Reinigen von Förderbändern mit mindestens einer an Auslegerarmen angeordneten Abstreifleiste zur Beaufschlagung der Arbeitsfläche des Gurtbandes im Untertrum, wobei die Auslegerarme zur Aufbringung des Anpreßdruckes um eine mit ihnen drehfest verbundene in einer Gehäusebüchse gelagerten Schwenkachse unter der Kraft einer dazwischen angeordneten Spannfeder über eine Spannvorrichtung am Untertrum anstellbar sind.

Eine Vorrichtung dieser Art ist aus der EP 0 157 246 bekannt geworden. Nach deren Figuren 1 und 4 ist zwischen der Innenfläche der Gehäusebüchse und der Außenfläche der Schwenkachse eine beidendig eingespannte ebene Spiralfeder angeordnet, die nach ihrer Gattung und Form von Haus aus mit einer weichen Federkennlinie behaftet ist, deren genaue Berechnung sich schwierig gestaltet. Der Anpreßdruck für die Abstreifleisten wird nicht nur über diese ebene Spiralfeder, sondern über ein Blattfederpaket übertragen, welches die Auslegerarme bildet. Selbst wenn man unterstellt, daß die ebene Spiralfeder relativ hart ausgebildet sein könnte, so muß die Gesamtfeder, zu welcher auch das Federpaket der Auslegerarme gehört, insgesamt eine relativ weiche Kennlinie aufweisen, wodurch Schwingungen in der Abstreifleiste relativ zum Untertrum des Gurtbandes ebenso unausweichlich sind wie damit verbundene, verminderte Abstreiferleistungen. Außerdem ist diese Vorrichtung mit einer raumgreifenden Spanneinrichtung behaftet, die nicht an schwer zugänglichen Stellen anbringbar, nur auf einen geringen Schwenkwinkel begrenzt ist und daher für einen Reversierbetrieb nicht infrage kommt.

Von diesem nächstkommenden Stand der Technik ausgehend, liegt der Erfindung die Aufgabe zugrunde, eine Vorrichtung der eingangs genannten Gattung mit einer äußerst kompakten, raumsparenden sowie auch an schwer zugänglichen Stellen anbringbaren Spannvorrichtung zu schaffen, deren Spannfeder eine hohe Eigendämpfung aufweist und bei der gesamten Vorrichtung eine ausgezeichnete Abstreiferleistung bewirkt.

Diese Aufgabe wird in Verbindung mit dem eingangs genannten Gattungsbegriff erfindungsgemäß dadurch gelöst, daß die Auslegerarme starr ausgebildet sind und zwischen der Gehäusebüchse und der Schwenkachse eine von den Arretierungsschrauben in der Gehäusebüchse wahlweise festsetzbare und wieder lösbare und dann darin entgegen der Kraft der hart ausgebildeten Spannfeder drehbare Spannbüchse eingesetzt ist, zwischen deren Innenmantelfläche und der Schwenkachse die Spannfeder formschlüssig angeordnet ist und auf deren Außenmantelfläche ein darauf drehbarer, mittels einer Klemmschraube mit ihr wahlweise kuppelbarer und wieder lösbarer Spannring vorgesehen ist, der mit einem drehfest mit ihm verbundenen Spannhebel und einer Spannschraube die Spannvorrichtung bildet. Durch die starr ausgebildeten Auslegerarme und die harte Spannfeder wird ein Flattern der Auslegerarme und damit der Abstreifleisten am Untertrum des Förderbandes unterbunden und eine gleichmäßige Abstreiferleistung sichergestellt, da eine harte Feder eine hohe Eigendämpfung aufweist. Ferner wird durch die Anordnung der Spannbüchse zwischen Gehäusebüchse und Schwenkachse in Verbindung mit den Arretierungsschrauben der Gehäusebüchse und der Klemmschraube des kuppelbaren Spannringes eine Spannvorrichtung gewährleistet, die eine Drehung der Spannbüchse und damit der Schwenkachse und damit auch der Auslegerarme und der gesamten Abstreifleisten um etwa 360° gestattet. Bei steiler Anstellung der Abstreifleisten an den Untertrum des Gurtbandes wird bei einem Reversierbetrieb des Förderbandes ein selbsttätiges Überschnacken der Abstreifleisten über den Totpunkt von der einen zur anderen Förderrichtung ermöglicht. Da zudem die Arretierungsschrauben nur einen geringen Platzbedarf erfordern und der Spannhebel in Verbindung mit dem Spannring äußerst kompakt gestaltet werden kann, erfordert die gesamte Vorrichtung nur einen geringen Platzbedarf und ist auch an schwer zugänglichen Stellen des Förderbandes ohne nennenswerte Schwierigkeiten montierbar und einjustierbar.

Nach einer ersten vorteilhaften Weiterbildung der Erfindung umgreift der Spannring zwischen einer geteilten Gehäusebüchse etwa die Mitte der Spannbüchse. Dadurch wird eine gleichmäßige Kraftverteilung während des Spannvorganges sowohl in bezug auf die beiden Teile der Gehäusebüchse als auch den Spannring sichergestellt.

Es ist jedoch nach einer zweiten Ausführungsform auch möglich, daß der Spannring an einem Ende der Spannbüchse neben dem ihm zugekehrten Ende der Gehäusebüchse die Spannbüchse umgreift. In diesem Fall ist zwar nicht unbedingt eine gleichmäßige Kraftverteilung gewährleistet, jedoch eine einfache Montage der Spannbüchse.

Zur Erleichterung des Spannvorganges ist an gut zugänglicher Stelle der Außenumfangsfläche des Spannringes ein Innengewinde zum Durchgriff der Klemmschraube auf die Außenmantelfläche der Spannbüchse und an anderer Stelle ein kurzer Spannhebel vorgesehen. Dieser Spannhebel weist vorteilhaft die Form einer kurzen Gabel mit einem dazwischen angeordneten Verbindungsbolzen auf, in welcher ein Innengewinde zum Durchgriff der Spannschraube gegen ein Widerlager vorgesehen ist. Vorteilhaft ist die Gehäusebüchse auf einer Gehäusekonsole befestigt, welche einerseits das Widerlager der Spannschraube bildet und mit welcher andererseits die gesamte Vorrichtung an einem Gestell des Förderbandes angebracht werden kann.

Bei geteilter Ausbildung der Gehäusebüchse ist diese mit zwei auf jedem Gehäuseteil fluchtend zur Schwenkachse angeordneten Arretierungsschrauben versehen. Diese Arretierungsschrauben durchgreifen durch je eine Durchgangsbohrung die Gehäusebüchse und die Klemmschraube durch eine weitere Durchgangsbohrung den Spannring, wobei auf die jeweilige Außenmantelfläche an Gehäusebüchse und Spannring koaxial zur jeweiligen Durchgangsbohrung eine Mutter mit entsprechendem Innengewinde aufgeschweißt ist. Durch diese Ausbildung kann die Gehäusebüchse relativ dünnwandig gestaltet werden und dennoch eine ausreichende Anzahl an Gewindegängen für die Arretierungsschrauben und die Klemmschraube sichergestellt werden.

Nach einer besonders vorteilhaften Weiterbildung der Erfindung besteht die Spannfeder aus einer Gummi-oder Kunststoffeder mit hoher Eigendämpfung. Durch diese Ausbildung wird bei gleichzeitiger Federung nach sämtlichen Seiten eine Kombination von Federung und Dämpfung gewährleistet.

Nach einer ersten Ausführungsform besteht die Gummi- oder Kunststoffeder in an sich bekannter Weise aus vier zwischen einem Vierkantrohr und einer im Querschnitt viereckigen Ausnehmung in der Spannbüchse eingesetzten Gummi- oder Kunststoffstabfedern. Derartige Teile sind als Serienteile preiswert auf dem Markt erhältlich und haben sich in zahlreichen gattungsfremden Anwendungsfällen bewährt.

Nach einer weiteren Ausführungsform weist sowohl die Innenmantelfläche der Spannbüchse als auch die Außenmantelfläche der Schwenkachse Vorsprünge auf, zwischen denen die Spannfeder formschlüssig aus Gummi oder Kunststoff bestehend eingegossen ist. Dadurch entsteht ein kompakter Gummi- bzw. Kunststoffederkörper mit hoher Eigendämpfung, der den gesamten Raum zwischen der Innenmantelfläche der Spannbüchse und der Außenmantelfläche der Schwenkachse einnimmt.

Schließlich ist nach einer weiteren vorteilhaften Ausführungsform auch eine Serienschaltung von mehreren Federn hintereinander möglich, ohne daß dadurch die Kompaktheit der erfindungsgemäßen Vorrichtung beeinträchtigt wird.

Nach einer ersten Ausführungsform besteht eine solche kombinierte Spannfeder aus einer Gummi- oder Kunststoffeder mit hoher Dämpfung und einer in Reihe geschalteten, beidendig eingespannten, gewundenen, harten Biegefeder, die einenends formschlüssig mit der Gummi- bzw. Kunststoffeder und anderenends mit der Schwenkachse formschlüssig gekuppelt ist. Dadurch ergeben sich erhebliche Variationsmöglichkeiten der Anordnung einer Gesamtfeder mit optimaler Federkonstante.

Letzteres gilt auch für eine weitere Ausführungsform dergestalt, daß die Spannfeder aus einer Gummi- oder Kunststoffeder und einer zu dieser in Reihe geschalteten Torsionsstabfeder zusammengesetzt ist, die von der Schwenkachse gebildet wird. Dadurch ergibt sich eine harte Feder mit hoher Eigendämpfung, wobei die Gummi- oder Kunststoffeder aufgrund ihrer entsprechenden Elastizität einen schonenden Eingriff der Abstreifleisten am Untertrum des Gurtbandes sicherstellt. Die Torsionsstabfeder ist vorteilhaft einerseits mit dem Auslegerarm und andererseits über mindestens eine Paßfeder mit einer sie formschlüssig umgreifenden Hülse gekuppelt, die wiederum ihrerseits formschlüssig mit der Gummi- bzw. Kunststoffeder verbunden ist. Diese Gummi- bzw. Kunststoffeder kann aus vulkanisiertem, natürlichem oder synthetischem Kautschuk bestehen, wobei hier unterschieden wird zwischen Weich- und Hartgummi, je nachdem ob ein Vulkanisat mit geringem oder hohem Schwefelgehalt vorliegt.

Zur weiteren Erleichterung der Einjustierung der Abstreifleisten mit einem für die Abstreiferleistung günstigen Anpreßdruck während der Montage weist jeder der starren Auslegerarme an seinem von der Schwenkachse abgewandten Ende eine Lagerhülse auf, in welcher eine eine Abstreifleiste tragende Tragachse schwenkbar und mittels einer die Lagerhülse durchgreifenden Arretierungsschraube in jeder beliebigen Stellung festsetzbar ist. Dadurch können während der Montage die Abstreifleisten in einem jeweils am günstigsten erscheinenden Eingriffwinkel am Untertrum des Gurtbandes angestellt werden, ohne daß hierzu - wie sonst üblich - die Spanneinrichtung bemüht werden muß. Dadurch bleibt die für die Abstreiferleistung optimale Federkraft und Dämpfung erhalten.

Zur Erzielung einer gleichmäßigen Vorspannung der Abstreifleisten am Untertrum des Gurtbandes ist jede Spannbüchse der beiden Auslegerarme an einem Ende formschlüssig mit einem Zeiger gekoppelt, dessen Zeigerende einer ortsfesten Skala auf der Gehäusekonsole zugeordnet ist. Bei identischer Ausbildung der Spannbüchsen, des Spannringes sowie der Spannfedern geben die Zeiger bei gleicher Auslenkung die gleiche Vorspannkraft der Spannfedern an.

Mehrere Ausführungsbeispiele der Erfindung sind in den Zeichnungen dargestellt. Dabei zeigen:

Fig. 1 die Seitenansicht auf eine erste Ausführungsform der Vorrichtung mit vier zwischen einem Vierkantrohr und einer viereckigen Ausnehmung in der Spannbüchse eingesetzten Gummi- oder Kunststoffstabfedern,

Fig. 1a eine Seitenansicht von Fig. 1 auf einen Auslegerarm mit nur einer Abstreifleiste,

Fig. 2 die Draufsicht auf die Vorrichtung von Fig. 1 in Richtung des Pfeiles II,

Fig. 3 die Frontansicht in Richtung des Pfeiles III von Fig. 1,

Fig. 4 die Explosionsansicht der rechten Bildhälfte von Fig. 3 in Draufsicht des Pfeiles IV,

Fig. 5 die Schnittansicht durch die Gehäusebüchse, die Spannbüchse und die Schwenkachse entlang der Linie V-V von Fig. 1,

Fig. 6 die Ansicht in Richtung des Pfeiles VI von Fig. 5,

Fig. 7 eine der Schnittlinie V-V von Fig. 1 entsprechende Schnittansicht durch eine zwischen Spannbüchse und Schwenkachse angeordneten Gummi- bzw. Kunststoffeder und einer in Reihe dazu geschalteten, beidendig eingespannten, gewundenen Biegefeder,

Fig. 8 die Ansicht in Richtung des Pfeiles VIII von Fig. 7 bei abgenommenem Zeiger,

Fig. 9 eine der Schnittlinie V-V von Fig. 1 entsprechende weitere Ausführungsform mit einer vollständig zwischen Spannbüchse und Schwenkachse angeordneten Gummi- oder Kunststoffeder und einer dieser in Reihe geschalteten Torsionsstabfeder, die von der Schwenkachse gebildet wird,

Fig. 10 die Ansicht in Richtung des Pfeiles X von Fig. 9,

Fig. 11 die Seitenansicht einer weiteren Ausführungsform mit verstellbaren sowie abwinkelbaren Auslegerarmen,

Fig. 12 eine Teilansicht von Fig. 11 mit einem abgewinkeltem Auslegerarm,

Fig. 13 die Draufsicht in Richtung des Pfeiles XIII von Fig. 11 mit verkürzten Auslegerarmen und

Fig. 14 die Einzelheit von Fig. 13 in vergrößerter Darstellung in Richtung des Pfeiles XIV von Fig. 13.

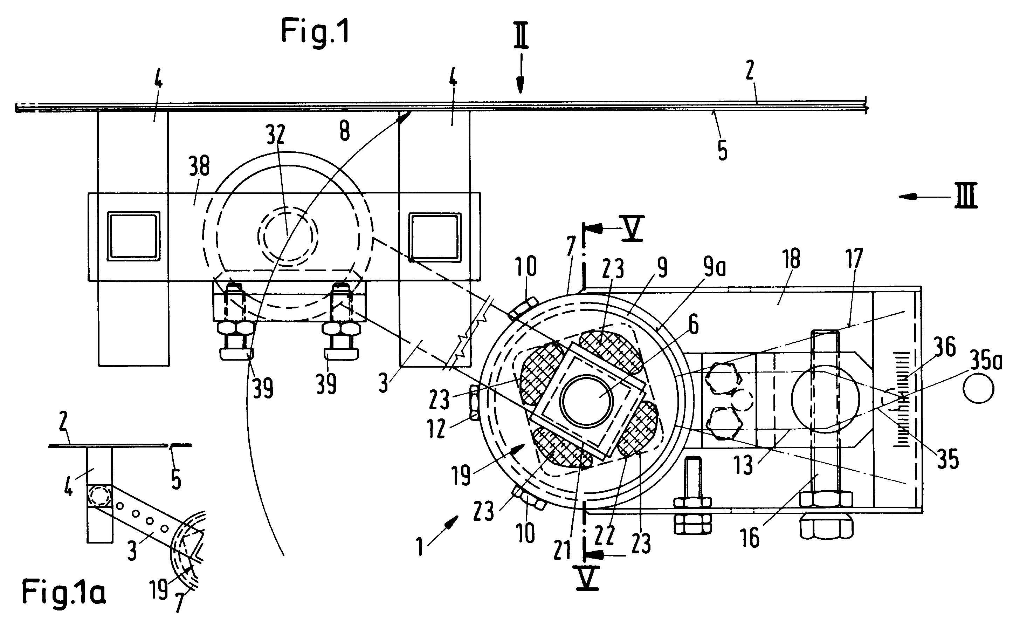

Gemäß den Figuren 1 bis 4 besteht die erfindungsgemäße Vorrichtung 1 zum Reinigen eines Förderbandes 2 aus mindestens einer, hier zwei, an Auslegerarmen 3 angeordneten Abstreifleisten 4, von denen die Arbeitsfläche 5 des Förderbandes 2 im Untertrum beaufschlagt wird. In Fig. 1a wurde die Tandemausführung der Figuren 1 bis 4 mit zwei Abstreifleisten 4 durch eine Anordnung mit nur einer Abstreifleiste 4 ersetzt. Die starr ausgebildeten Auslegerarme 3 sind gemäß Fig. 1 um je eine Schwenkachse 6 in Richtung des Pfeiles 8 verschwenkbar in je einer Gehäusebüchse 7 gelagert. Zwischen jeder Gehäusebüchse 7 und jeder Schwenkachse 6 befindet sich eine Spannbüchse 9, welche über die Arretierungsschrauben 10 wahlweise in der Gehäusebüchse 7 festsetzbar und wieder davon lösbar ist.

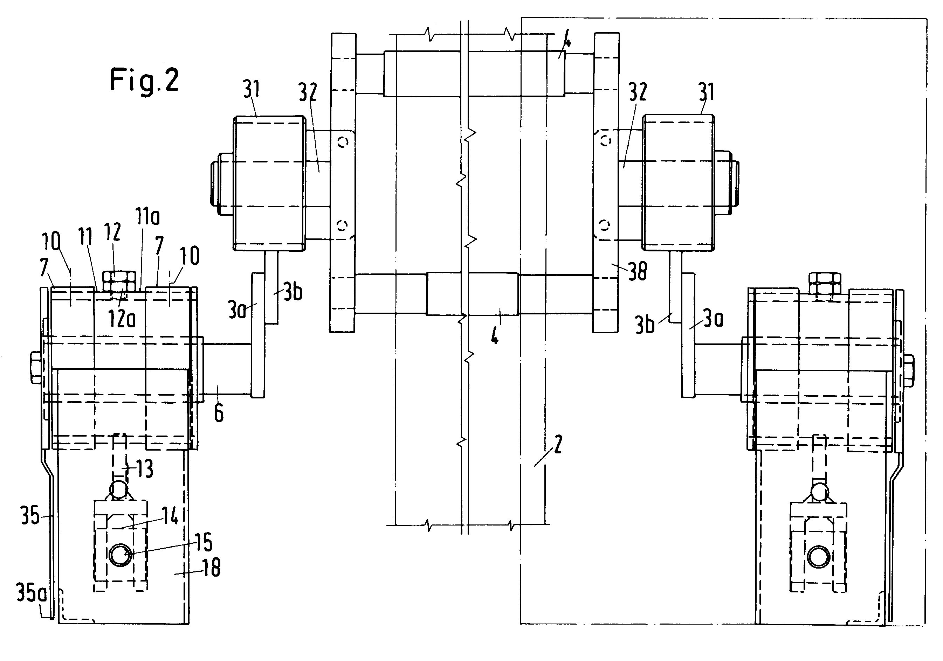

Wie aus den Figuren 2 bis 4 entnommen werden kann, befindet sich zwischen der geteilten Gehäusebüchse 7 etwa in der Mitte ein Spannring 11, welcher die Spannbüchse 9 mittig umgreift. Es versteht sich, daß dieser Spannring 11 bei einer anderen Ausführungsform mit ungeteilter Gehäusebüchse 7 neben einem der ihm zugekehrten Enden der Gehäusebüchse 7 die Spannbüchse 9 umgreifen kann.

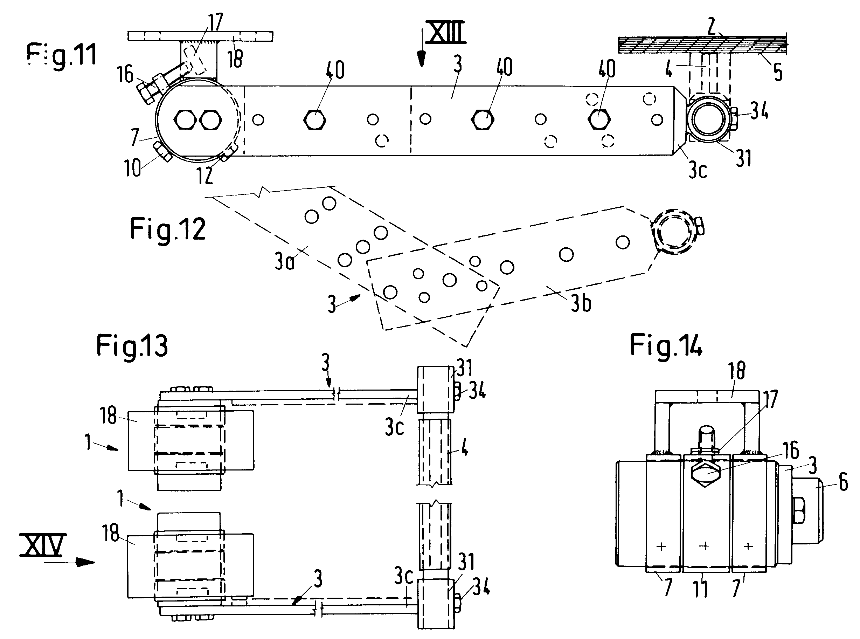

An gut zugänglicher Stelle der Außenumfangsfläche 11a des Spannringes 11 ist ein noch zu beschreibendes Innengewinde zum Durchgriff der Klemmschraube 12 auf die Außenmantelfläche 9a der Spannbüchse 9 und an anderer Stelle ein kurzer Spannhebel 13 vorgesehen (s. Figuren 1 und 2). Dieser Spannhebel 13 weist die Form einer kurzen Gabel mit einem dazwischen angeordneten Verbindungsbolzen 14 auf, in welchem ein Innengewinde 15 zum Durchgriff der aus Fig. 1 ersichtlichen Spannschraube 16 gegen ein Widerlager 17 angeordnet ist, welches in Fig. 1 strichpunktiert und in Fig. 11 als Platte dargestellt ist.

Wie ferner den Figuren 1, 2, 4 und 11 entnommen werden kann, ist die Gehäusebüchse 7 auf einer zur Vorrichtung gehörenden Gehäusekonsole 18 befestigt, welche einerseits das Widerlager der Spannschraube 16 bildet und mit welcher andererseits die gesamte Vorrichtung an einem nicht dargestellten Gestell des Förderbandes 2 angebracht ist.

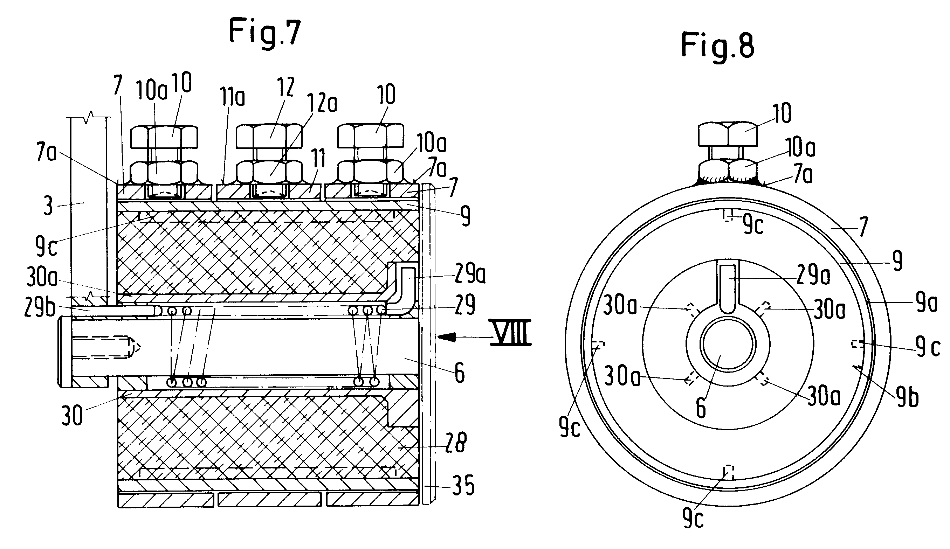

Wie insbesondere aus den Figuren 7 bis 10 hervorgeht, ist die Gehäusebüchse 7 in geteilter Ausbildung mit zwei auf jedem Gehäuseteil fluchtend zur Schwenkachse 6 angeordneten Arretierungsschrauben 10 versehen. Diese Arretierungsschrauben 10 durchgreifen durch je eine Durchgangsbohrung 7b die Gehäusebüchse 7 und die Klemmschraube 12 durch eine weitere Durchgangsbohrung 11b den Spannring 11, wobei auf die jeweilige Außenmantelfläche 7a der Gehäusebüchse 7 und die Außenmantelfläche 11a des Spannringes 11 koaxial eine Mutter 10a bzw. 12a mit entsprechendem Innengewinde aufgeschweißt ist.

Zwischen der Innenmantelfläche 9b der Spannbüchse 9 und der Schwenkachse 6 ist formschlüssig die pauschal mit der Bezugsziffer 19 bezeichnete Spannfeder angeordnet. Diese Spannfeder 19 bildet gemeinsam mit dem Spannring 11, dem Spannhebel 13 und der Spannschraube 16 die pauschal mit der Bezugsziffer 20 bezeichnete Spannvorrichtung. Diese Spannfeder 19 besteht erfindungsgemäß aus einer Gummi-oder Kunststoffeder mit hoher Eigendämpfung.

Nach einer ersten Ausführungsform gemäß den Figuren 1, 4 und 5 wird diese Gummi- oder Kunststoffeder in an sich bekannter Weise aus vier zwischen einem Vierkantrohr 21 und einer im Querschnitt viereckigen Ausnehmung 22 in der Spannbüchse 9 eingesetzten Gummi- oder Kunststoffstabfedern 23 gebildet. Eine derartige Gummi- oder Kunststoffeder ist seit langem bekannt und für vielfältige Verwendungszwecke im Einsatz. Die leistenförmigen Vorsprünge bestehen aus in der Spannbüchse 9 eingesetzten Paßfedern.

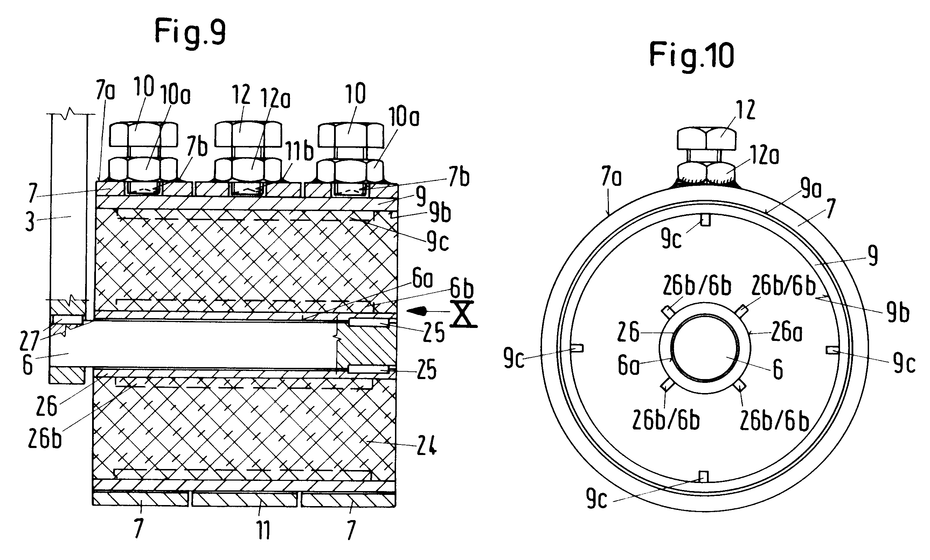

Nach einer zweiten Ausführungsform gemäß den Figuren 9 und 10 wird die Spannfeder von einer zwischen der Innenmantelfläche 9b der Spannbüchse 9 und der Außenmantelfläche 6a der Schwenkachse 6 eingegossenen Gummi- oder Kunststoffeder 24 gebildet. Um diese Gummi-oder Kunststoffeder 24 formschlüssig zwischen der Schwenkachse 6 einerseits der Innenmantelfläche 9b der Spannbüchse 9 andererseits zu haltern, weisen sowohl die Schwenkachse 6 als auch die Innenmantelfläche 9b der Spannbüchse 9 leistenförmige Vorsprünge 6b bzw. 9c auf, die mit den jeweiligen Mantelflächen 6a bzw. 9b verschweißt sind. Diese Vorsprünge 6b und 9c erstrecken sich leistenförmig über nahezu die gesamte Länge der Feder 24 und werden lediglich an ihren Enden von Gummi oder Kunststoff übergriffen und darin eingebettet.

Wie aus dem Ausführungsbeispiel der Figuren 9 und 10 hervorgeht, kann sich die Spannfeder 19 aus der Gummi- oder Kunststoffeder 24 und einer zu dieser 24 in Reihe geschalteten Torsionsstabfeder zusammensetzen, die von der Schwenkachse 6 gebildet werden kann. Im dargestellten Fall ist diese Schwenkachse 6 über Paßfedern 25 mit einer Hülse 26 in formschlüssigem Eingriff, die ähnlich wie die Vorsprünge 6b mit leistenförmigen Vorsprüngen 26b zur formschlüssigen Halterung der Gummi- bzw. Kunststoffeder 24 versehen ist. Am anderen Ende ist die Schwenkachse 6 über eine weitere Paßfeder 27 mit dem Auslegerarm 3 gekuppelt.

Nach einer weiteren Ausführungsform gemäß den Figuren 7 und 8 besteht die pauschal mit 19 bezeichnete Spannfeder aus einer Gummi- oder Kunststoffeder 28 mit hoher Dämpfung und einer in Reihe geschalteten, beidendig eingespannten, gewundenen Biegefeder 29, die mit einem Ende 29a formschlüssig mit der Gummi- bzw. Kunststoffeder 28 und mit ihrem anderen Ende 29b formschlüssig mit dem Auslegerarm 3 gekuppelt ist. Zum Schutz vor der einzugießenden Gummi- oder Kunststoffeder 28 ist auch diese Biegefeder 29 von einer Hülse 30 übergriffen, die zur formschlüssigen Kupplung mit der Gummifeder 28 gleichfalls mit leistenförmigen Vorsprüngen 30a versehen ist.

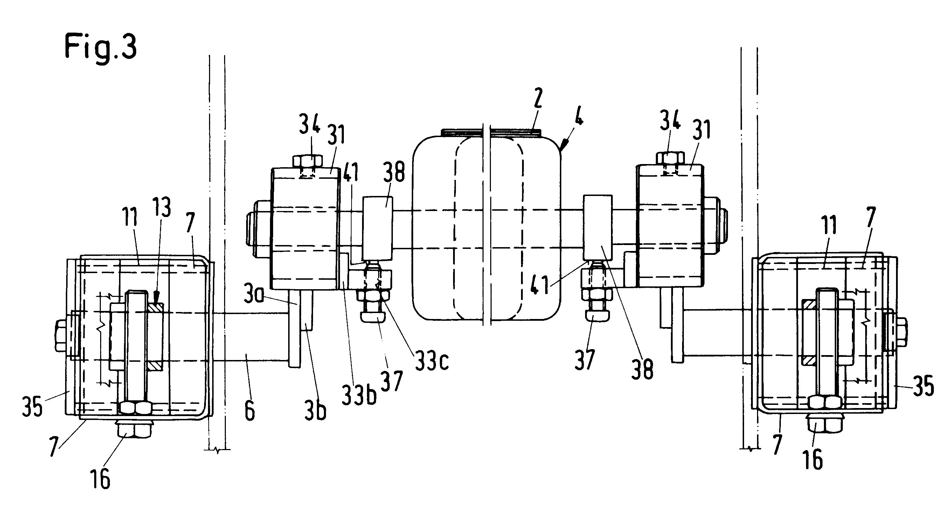

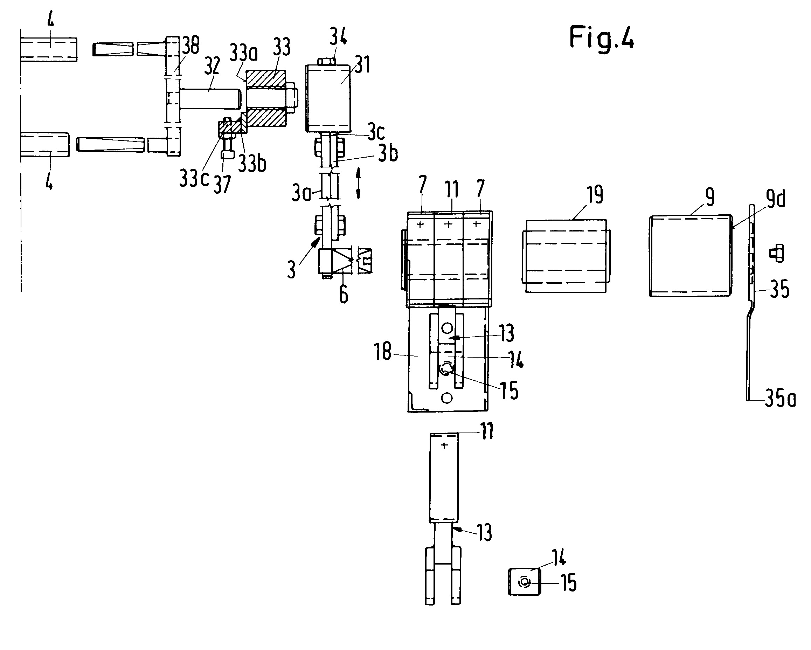

Gemäß den Figuren 4, 11 und 14 weist jeder der starren Auslegerarme 3 an seinem von der Schwenkachse 6 abgewandten Ende 3c eine Lagerhülse 31 auf, in welcher eine eine oder mehrere Abstreifleisten 4 tragende Tragachse 32 über eine Justierhülse 33 schwenkbar gelagert ist, die mittels einer die Lagerhülse 31 durchgreifenden Arretierungsschraube 34 in der Lagerhülse 31 festsetzbar ist. Die Justierhülse 33 ist an einem Ende 33a mit einem Fortsatz 33b mit Innengewinde 33c versehen, durch welches eine Justierschraube 37 durchgreift, die mit ihrem Gewindeende gegen das in Fig. 3 dargestellte Widerlager 41 anstellbar ist, welches von einem Tragarm der Wippe 38 gebildet wird. Dadurch kann mittels dieser Justierschraube 37 die Justierhülse 33 und damit die Tragachse 32 und somit auch die Abstreifleisten 4 mit optimalem Anstellwinkel an der Arbeitsfläche 5 des Förderbandes 2 in ihrer optimalen Betriebsstellung einjustiert werden.

Um die an jeder Seite des Förderbandes 2 befindlichen Auslegerarme 3 mit den Abstreifleisten 4 mit optisch erkennbarer gleicher Vorspannkraft an der Arbeitsfläche 5 des Förderbandes 2 anstellen zu können, ist die Spannbüchse 9 an einem Ende 9d (s. Fig. 4) formschlüssig mit einem Zeiger 35 gekoppelt, dessen Zeigerende 35a einer ortsfesten Skala 36 auf der Gehäusekonsole 18 zugeordnet ist. Dadurch können die Auslegerarme 3 an jeder Seite des Förderbandes 2 mit gleicher Vorspannkraft beaufschlagt werden. Dieses Vorspannen der Auslegerarme 3 erfolgt mit der erfindungsgemäßen Vorrichtung wie folgt:

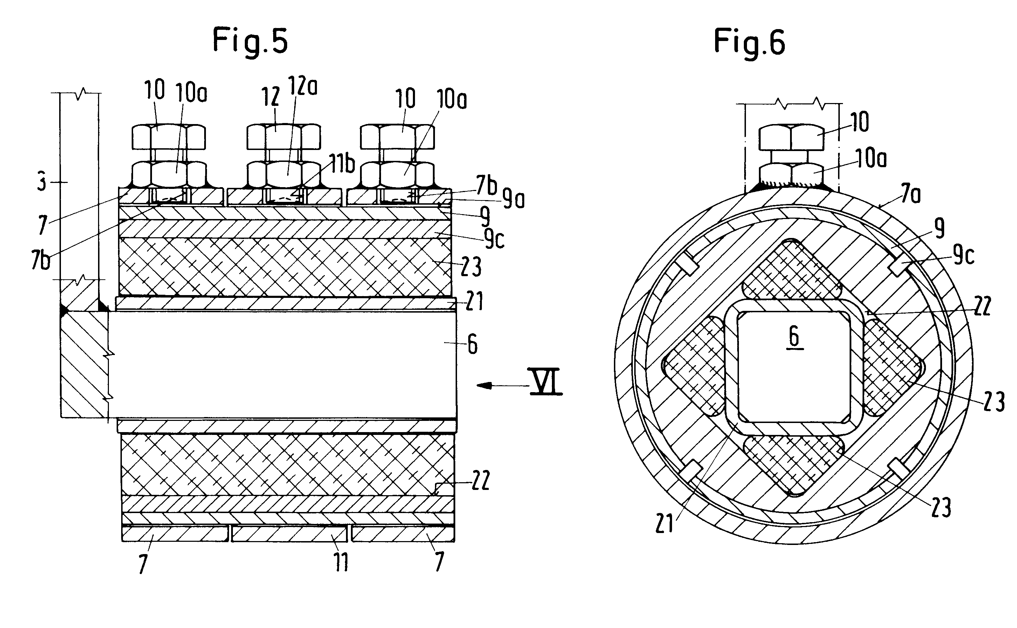

Zur Aufbringung des Anpreßdruckes werden gemäß den Figuren 5 bis 10 sowohl die Arretierungsschrauben 10 als auch die Klemmschrauben 12 gelöst, sodann die Abstreifleisten durch entsprechende Anschwenkung der Auslegerarme 3 an die Arbeitsfläche 5 des Förderbandes 2 lose angelegt und hiernach die Klemmschraube 12 derart angezogen, daß der Spannring 11 die Spannbüchse 9 an ihrer Außenmantelfläche 9a klemmt.

Hiernach wird gemäß Fig. 1 die Spannschraube 16 derart gegen das Widerlager 17 geschraubt, daß die Auslegerarme 3 in Richtung des Pfeiles 8 geschwenkt werden, bis der gewünschte Anpreßdruck, der an der Skala 36 ablesbar ist, erreicht ist. Hiernach werden die Arretierungsschrauben 10 gegen die Außenmantelfläche 9a der Spannbüchse 9 angezogen, bis sie die Spannbüchse 9 klemmen. Nach Klemmung durch die Arretierungsschrauben 10 wird die Spannschraube 16 des Spannringes 11 gelöst. Diese wechselweise Klemmung und Lösung der Klemmschraube 12 und der Arretierungsschrauben 10 wird so lange wiederholt, bis der gewünschte Anpreßdruck erreicht ist. Ist der gewünschte Anpreßdruck erreicht, bleibt die Klemmschraube 12 gelöst, wohingegen die Arretierungsschrauben 10 die Spannbüchse 9 unverrückbar halten. Der Anpreßdruck wird gemäß den Figuren 7 bis 10 von der Spannbüchse 9 über die nach innen gerichteten Fortsätze 9c auf die Gummi- oder Kunststoffedern 24 bzw. 28 und von dieser gemäß den Figuren 7 und 8 über die Vorsprünge 30a der Hülse 30 über die Biegefeder 29 und deren Ende 29b auf die Auslegerarme 3 übertragen.

Beim Ausführungsbeispiel der Figuren 9 und 10 erfolgt die Kraftübertragung von der Spannbüchse 9 über deren nach innen gerichteten Vorsprünge 9c an die Gummi- bzw. Kunststoffeder 24 auf die Vorsprünge 6b der Schwenkachse 6 bzw. 26b der Hülse 26 sowie über die Paßfedern 25 auf die als Torsionsstabfeder ausgebildete Schwenkachse 6 und von dieser über die Paßfeder 27 auf die Auslegerarme 3.

Bei den beiden Ausführungsbeispielen der Figuren 7 bis 10 ist somit als Spannfeder 19 eine Hintereinanderschaltung von der Gummi- bzw. Kunststoffeder 28 mit der Biegefeder 29 einerseits sowie von der Gummi- bzw. Kunststoffeder 24 mit der Torsionsstabfeder 6 andererseits vorgesehen. Dadurch ergibt sich beim Ausführungsbeispiel der Figuren 7 und 8 eine Federkonstante C der gesamten Spannfeder 19 zu

$$\frac{1}{C19} = \frac{1}{C28} + \frac{1}{C29}$$

und beim Ausführungsbeispiel der Figuren 9 und 10 zu

$$\frac{1}{C19} = \frac{1}{C24} + \frac{1}{C6}$$

Dabei beziehen sich die Indizes der Federkonstanten C jeweils auf die Bezugsziffern der so bezeichneten Federn. Dadurch, daß nunmehr die Auslegerarme 3 über die vorbeschriebenen Federn mit der Spannbüchse 9 in der Gehäusebüchse 7 bzw. im Spannring 11 um 360° drehbar sind, können die Abstreifleisten 4 mit der äußerst kompakt gestalteten erfindungsgemäßen Vorrichtung auch an schwer zugänglichen Stellen zum Reinigen von Förderbändern 2 eingesetzt werden. Da die Spannvorrichtung 20 mit ihren Teilen 9, 11, 12 in einer konzentrisch die Spannfedern 19 umgreifenden Gestaltung angeordnet ist und der Spannhebel 13 gemäß Fig. 2 mit der Spannschraube 16 gemäß Fig. 1 sehr kurz und damit gleichfalls kompakt gehalten werden kann, wird auf diese Weise eine äußerst raumsparende Vorrichtung 1 zum Reinigen von Förderbändern 2 geschaffen. Durch die teils nur aus Gummi- bzw. Kunststoffedern 23, 24, 28 oder aus einer Kombination mit anderen in Reihe geschalteten Federn 29 bzw. 6 bestehenden Federelemente entsteht eine Spannfeder 19 mit äußerst günstigen Dämpfungs- und Federeigenschaften, deren Federkonstante in einem weiten Bereich zur Erzielung einer optimalen Abstreiferleistung variierbar ist.

Zu dieser Optimierung der Abstreiferleistung trägt auch die günstige Einstellbarkeit der Abstreifleisten 4 gemäß den Figuren 11 bis 14 mittels der Lagerhülse 31 und der Justierschraube 37 bei, mit welcher gemäß Fig. 4 die Tragachse 32 und damit die Abstreifleisten 4 optimal an die Arbeitsfläche 5 des Förderbandes 2 angestellt werden können.

Gemäß den Figuren 1 und 4 sind die Abstreifleisten 4 als Tandemleisten ausgebildet, von denen sich jeweils zwei quer zum Förderband 2 erstrecken. Diese Tandemleisten sind an einer um eine Achse 32 schwenkbaren Wippe 38 angeordnet, deren Wippenausschlag durch die beiden Anschlagschrauben 39 begrenzt ist. Die Ausbildung einer derartigen Wippe mit Wippenausschlagsbegrenzung ist aus dem DE 39 15 609 bekannt und nicht Gegenstand dieser Erfindung.

Gemäß dem Ausführungsbeispiel der Fig. 12 ist der Auslegerarm 3 als geteilter Auslegerarm 3a, 3b ausgebildet, der auch in unterschiedlichen Winkellagen mittels Schrauben 40 feststellbar sind. Dadurch kann sowohl die Gesamtlänge der Auslegerame 3 als auch der Winkel der Auslegerarmteile 3a, 3b zueinander verändert werden.

Bezugszeichenliste:

| | |
|---|---|
| Vorrichtung | 1 |
| Förderband | 2 |
| Auslegerarme | 3 |
| Auslegerarmteile | 3a, 3b |
| Ende der Auslegerarme 3 | 3c |
| Abstreifleiste | 4 |
| Arbeitsfläche | 5 |
| Schwenkachse | 6 |
| Außenmantelfläche der Schwenkachse 6 | 6a |
| Vorsprünge | 6b, 9c, 26b |
| Gehäusebüchse | 7 |
| Außenmantelfläche der Gehäusebüchse 7 | 7a |
| Durchgangsbohrung | 7b |
| Pfeil | 8 |

| | |
|---|---|
| Spannbüchse | 9 |
| Außenmantelfläche der Spannbüchse 9 | 9a |
| Innenmantelfläche der Spannbüchse 9 | 9b |
| Ende der Spannbüchse 9 | 9d |
| Arretierungsschrauben | 10, 34 |
| Muttern | 10a, 12a |
| Spannring | 11 |
| Außenumfangsfläche des Spannringes 11 | 11a |
| Durchgangsbohrung | 11b |
| Klemmschraube | 12 |
| Spannhebel | 13 |
| Verbindungsbolzen | 14 |
| Innengewinde | 15 |
| Spannschraube | 16 |
| Widerlager | 17 |

| | |
|---|---|
| Gehäusekonsole | 18 |
| Spannfeder | 19 |
| Spannvorrichtung | 20 |
| Vierkantrohr | 21 |
| Ausnehmung | 22 |
| Gummi- bzw. Kunststoffstabfedern | 23 |
| Gummi- bzw. Kunststoffedern | 24, 28 |
| Paßfeder | 25, 27 |
| Hülsen | 26, 30 |
| Biegefeder | 29 |
| Enden der Biegefeder 29 | 29a, 29b |
| Vorsprünge der Hülse 30 | 30a |
| Lagerhülse | 31 |
| Tragachse | 32 |
| Justierhülse | 33 |
| Ende der Justierhülse 33 | 33a |

| | |
|---|---|
| Fortsatz | 33b |
| Innengewinde | 33c |
| Zeiger | 35 |
| Zeigerende | 35a |
| Skala | 36 |
| Schrauben | 37, 39, 40 |
| Wippe | 38 |
| Federkonstante | C |

**Patentansprüche**

1. Vorrichtung (1) zum Reinigen von Förderbändern (2) mit mindestens einer an Auslegerarmen (3) angeordneten Abstreifleiste (4) zur Beaufschlagung der Arbeitsfläche (5) des Gurtbandes im Untertrum, wobei die Auslegerarme (3) zur Aufbringung des Anpreßdruckes um eine mit ihnen drehfest verbundene in einer Gehäusebüchse (7) gelagerten Schwenkachse (6) unter der Kraft einer dazwischen angeordneten Spannfeder (19) über eine Spannvorrichtung (20) am Untertrum anstellbar sind, **dadurch gekennzeichnet,** daß die Auslegerarme (3) starr ausgebildet sind und zwischen der Gehäusebüchse (7) und der Schwenkachse (6) eine von Arretierungsschrauben (10) in der Gehäusebüchse (7) wahlweise festsetzbare und wieder lösbare und dann darin entgegen der Kraft der hart ausgebildeten Spannfeder (19) drehbare Spannbüchse (9) eingesetzt ist, zwischen deren Innenmantelfläche (9b) und der Schwenkachse (6) die Spannfeder (19) formschlüssig angeordnet ist und auf deren Außenmantelfläche (9a) ein darauf drehbarer, mittels einer Klemmschraube (12) mit ihr wahlweise kuppelbarer und wieder lösbarer Spannring (11) vorgesehen ist, der mit einem drehfest mit ihm verbundenen Spannhebel (13) und einer Spannschraube (16) die Spannvorrichtung (20) bildet.

2. Vorrichtung nach Anspruch 1, **dadurch gekennzeichnet**, daß der Spannring (11) zwischen einer geteilten Gehäusebüchse (7) etwa die Mitte der Spannbüchse (9) umgreift.

3. Vorrichtung nach Anspruch 1, **dadurch gekennzeichnet**, daß der Spannring (11) an einem Endbereich der Spannbüchse (9) neben dem zugekehrten Ende der Gehäusebüchse (7) die Spannbüchse (9) umgreift.

4. Vorrichtung nach einem der Ansprüche 1 bis 3, **dadurch gekennzeichnet**, daß an gut zugänglicher Stelle der Außenumfangsfläche (11a) des Spannringes (11) ein Innengewinde zum Durchgriff der Klemmschraube (12) auf die Außenmantelfläche (9a) der Spannbüchse (9) und an anderer Stelle ein kurzer Spannhebel (13) vorgesehen ist.

5. Vorrichtung nach einem der Ansprüche 1 bis 4, **dadurch gekennzeichnet**, daß der Spannhebel (13) die Form einer kurzen Gabel mit dazwischen angeordneter Verbindungsplatte (14) aufweist, in welcher ein Innengewinde (15) zum Durchgriff der Spannschraube (16) gegen ein Widerlager (17) vorgesehen ist.

6. Vorrichtung nach einem der Ansprüche 1 bis 5, **dadurch gekennzeichnet**, daß die Gehäusebüchse (7) auf einer Gehäusekonsole (18) befestigt ist, welche einerseits das Widerlager (17) der Spannschraube (16) aufweist und mit welcher andererseits die gesamte Vorrichtung (1) in unterschiedlichen Lagepositionen an einem Gestell des Förderbandes (2) anbringbar ist.

7. Vorrichtung nach einem der Ansprüche 1 bis 6, **dadurch gekennzeichnet**, daß die Gehäusebüchse (7) bei geteilter Ausbildung mit zwei auf jedem Gehäuseteil fluchtend zur Schwenkachse (6) angeordneten Arretierungsschrauben (10) versehen ist.

8. Vorrichtung nach einem der Ansprüche 1 bis 7, **dadurch gekennzeichnet**, daß die Arretierungsschrauben (10) durch je eine Durchgangsbohrung (7b) die Gehäusebüchse (7) und die Klemmschraube (12) durch eine Durchgangsbohrung (11b) den Spannring (11) durchgreifen, wobei auf die jeweilige Außenmantelfläche (7a, 11a) koaxial zur jeweiligen Durchgangsbohrung (7b, 11b) eine Mutter (10a, 12a) mit entsprechendem Innengewinde aufgeschweißt ist.

9. Vorrichtung nach einem der Ansprüche 1 bis 8, **dadurch gekennzeichnet**, daß die Spannfeder (23, 24, 28) aus einer Gummi- oder Kunststoffeder mit hoher Eigendämpfung besteht.

10. Vorrichtung nach einem der Ansprüche 1 bis 9, **dadurch gekennzeichnet**, daß die Gummi- oder Kunststoffeder in an sich bekannter Weise aus vier zwischen einem Vierkantrohr (21) und einer im Querschnitt viereckigen Ausnehmung (22) in der Spannbüchse (9) eingesetzten Gummi- oder Kunststoffstabfedern (23) hergestellt ist.

11. Vorrichtung nach einem der Ansprüche 1 bis 9, **dadurch gekennzeichnet**, daß sowohl die Innenmantelfläche (9b) der Spannbüchse (9) als auch die Außenmantelfläche (6a) der Schwenkachse (6) Vorsprünge (9c, 6b) aufweisen, zwischen denen eine Spannfeder (24) formschlüssig eingegossen ist.

12. Vorrichtung nach einem der Ansprüche 1 bis 11, **dadurch gekennzeichnet**, daß die Spannfeder (19) aus einer Gummi- oder Kunststoffeder (28) mit hoher Dämpfung und einer in Reihe geschalteten, beidendig eingespannten, gewundenen Biegefeder (29) besteht, die mit einem Ende (29a) formschlüssig mit der Gummi- bzw. Kunststoffeder (28) und mit ihrem anderen Ende (29b) mit der Schwenkachse (6) formschlüssig gekuppelt ist.

13. Vorrichtung nach einem der Ansprüche 1 bis 11, **dadurch gekennzeichnet**, daß die Spannfeder (19) aus einer Gummi- oder Kunststoffeder (24) und einer zu dieser (24) in Reihe geschalteten Torsionsstabfeder zusammengesetzt ist, die von der Schwenkachse (6) gebildet ist.

14. Vorrichtung nach Anspruch 13, **dadurch gekennzeichnet**, daß die Torsionsstabfeder (6) einerseits mit dem Auslegerarm (3) über eine Paßfeder (27) und andererseits über mindestens eine Paßfeder (25) mit einer sie formschlüssig umgreifenden Hülse (26) gekuppelt ist, die wiederum ihrerseits über Vorsprünge (26b) formschlüssig mit der Gummi- bzw. Kunststoffeder (24) verbunden ist.

15. Vorrichtung nach einem der Ansprüche 1 bis 14, **dadurch gekennzeichnet**, daß jeder der starren Auslegerarme (3) an seinem von der Schwenkachse (6) abgewandten Ende (3a) eine Lagerhülse (31) aufweist, in welcher eine eine Abstreifleiste (4) tragende Tragachse (32) schwenkbar und mittels einer die Lagerhülse (31) durchgreifenden Arretierungsschraube (34) in jeder beliebigen Stellung festsetzbar ist.

16. Vorrichtung nach einem der Ansprüche 1 bis 15, **dadurch gekennzeichnet**, daß die Spannbüchse (9) an einem Ende (9d) formschlüssig mit einem Zeiger (35) gekoppelt ist, dessen Zeigerende (35a) einer ortsfesten Skala (36) auf der Gehäusekonsole (18) zugeordnet ist.

## Claims

1. Apparatus (1) for cleaning conveyor belts (2) comprising at least one stripping edge (4), disposed on the articulated arms (3), for the purpose of acting upon the working surface (5) of the belt band in the lower empty belt wherein the articulated arms (3) for the purpose of applying the pressing down force can be adjusted about a pivot shaft (6) mounted non-rotatably connected to said articulated arms in a casing sleeve (7) under the force of an interpositioned tension spring (19) by way of a tensioning device (20) on the lower empty belt, characterised in that the articulated arms (3) are of a rigid design and between the casing sleeve (7) and the pivot shaft (6) is inserted a tensioning sleeve (9) which can be locked at will and released again by means of locking screws (10) in the casing sleeve (7), the said tensioning sleeve (9) can then be rotated therein against the force of the hard tension spring (19) which is disposed in a positive-locking manner between the inner peripheral surface (9b) of the tensioning sleeve (9) and the pivot shaft (6) and provided on the outer peripheral surface (9a) of the tensioning sleeve (9) is a tensioning ring (11) which can rotate on said outer peripheral surface and can be coupled thereto at will and released again by means of a clamping screw (12) and which together with a tensioning lever non-rotatably connected thereto and a tensioning screw (16) forms the tensioning device (20).

2. Apparatus according to claim 1, characterised in that the tensioning ring (11) between a divided casing sleeve (7) engages approximately the middle of the tensioning sleeve (9).

3. Apparatus according to claim 1, characterised in that the tensioning ring (11) engages the tensioning sleeve (9) at the end region of the tensioning sleeve (9) in the proximity of the facing end of the casing sleeve (7).

4. Apparatus according to any one of claims 1 to 3, characterised in that provided at an easily accessible site on the outer peripheral surface (11a) of the tensioning ring (11) is provided an inner thread for the purpose of allowing the penetration of the clamping screw (12) to the outer peripheral surface (9a) of the tensioning sleeve (9) and that a short tensioning lever (13) is provided at another site.

5. Apparatus according to any one of claims 1 to 4, characterised in that the tensioning lever (13) comprises the form of a short fork with a connection plate (14) disposed between the prongs and provided in said connection plate is an inner thread (15) for the purpose of allowing the penetration of the clamping screw (16) against a counter bearing (17).

6. Apparatus according to any one of claims 1 to 5, characterised in that the casing sleeve (7) is attached on a casing console (18) which comprises on the one hand the counter bearing (17) of the tensioning screw (16) and with which on the other hand the entire apparatus (1) can he moved into different positions on a frame of the conveyor belt (2).

7. Apparatus according to any one of claims 1 to 6, characterised in that the casing sleeve (7) when designed in two parts is provided with two locking screws (10) disposed on each casing part and in alignment with the pivot shaft (6).

8. Apparatus according to any one of claims 1 to 7, characterised in that the locking screws (10) engage the casing sleeve (7) in each case through a through-going bore (7b) and the clamping screw engages the tensioning ring (11) through a through-going bore (11b), wherein a nut (10a, 12a) comprising a corresponding inner thread is welded to the respective outer peripheral surface (7a, 11a) coaxially to the respective through-going bore (7b, 11b).

9. Apparatus according to any one of the claims 1 to 8, characterised in that the tension spring (23, 24, 28) consists of a rubber or synthetic material spring with a high intrinsic damping effect.

10. Apparatus according to any one of claims 1 to 9, characterised in that the rubber or synthetic material spring is manufactured in a manner known per se from four rubber or synthetic material springs (23) inserted between a square tube (21) and a recess, (22) comprising a square cross-section, in the tensioning sleeve (9).

11. Apparatus according to any one of the claims 1 to 9, characterised in that both the inner peripheral surface (9b) of the tensioning sleeve (9) and also the outer peripheral surface (6a) of the pivot shaft (6) comprise projections (9c, 6b) between which is cast is a positive-locking manner a tension spring (24).

12. Apparatus according to any one of claims 1 to 11, characterised in that the tension spring (19) consists of a rubber or synthetic material spring (28) having a high damping effect and a coiled flexible spring (29) which is connected in series and clamped at both ends, the said flexible spring being coupled in a positive-locking manner at one end (29a) to the rubber or synthetic material spring (28) and at its other end (29b) in a positive-locking manner to the pivot shaft (6).

13. Apparatus according to any one of claims 1 to 11, characterised in that the tension spring (19) is composed of a rubber or synthetic material spring (24) and a torsion rod spring which is connected in series with the spring (24) and is formed by the pivot shaft (6).

14. Apparatus according to claim 3, characterised in that the torsion rod spring (6) is coupled at one end to the articulated arm (3) by way of an adjusting spring (27) and at the other end by way of at least one adjusting spring (25) to a sleeve (26) which encompasses said torsion rod spring in a positive-locking manner and which sleeve is in turn

**EP 0 663 355 B1**

for its part connected by way of projections (26b) in a positive-locking manner to the rubber or synthetic material spring (24).

15. Apparatus according to any one of claims 1 to 14, characterised in that each of the rigid articulated arms (3) comprises at its end (3a) remote from the pivot shaft (6) a bearing sleeve (31) in which a bearing shaft (32), which carries a stripping edge (4), can pivot and can be locked in any optional position by means of a locking screw (34) which engages through the bearing sleeve (31).

16. Apparatus according to any one of claims 1 to 15, characterised in that the tensioning sleeve (9) is coupled at one end (9d) in a positive-locking manner to an indicator (35), the end of which (35a) is allocated to a fixed scale (36) on the casing console (18).

**Revendications**

1. Dispositif (1) pour le nettoyage de bandes transporteuses (2), comportant au moins un profilé de raclage (4) agencé à des potences (3), pour le raclage de la surface de travail (5) de la bande dans le brin inférieur, les potences (3) étant réglables par rapport au brin inférieur pour l'application de la pression d'appui, autour d'un axe de pivotement (6) solidaire de celles-ci, fixe en rotation et logé dans une douille (7), sous l'effet d'un ressort intermédiaire (19) moyennant un dispositif de serrage (20),
caractérisé en ce que
les potences (3) sont rigides et une douille de serrage rotative (9) est agencée entre la douille (7) et l'axe de pivotement (6), au choix, fixable dans la douille (7), et à nouveau désolidarisable de celle-ci moyennant des vis d'arrêt (10), et à l'encontre de l'effet du ressort dur (19) dans ladite douille (7), le ressort de serrage (19) étant agencé moyennant adaptation des formes entre la surface interne (9b) de la douille de serrage (9) et l'axe de pivotement (6), une bague de serrage rotative (11), au choix, solidarisable ou à nouveau désolidarisable de la douille de serrage (9) moyennant une vis de serrage (12) étant agencée sur la surface externe (9a) de la douille de serrage (9) et constituant, avec un levier de serrage(13) relié à celle-ci de façon fixe en rotation et une vis de serrage (16), le dispositif de serrage (20).

2. Dispositif selon la revendication 1 caractérisé en ce que la bague de serrage (11) entoure la partie médiane de la douille de serrage (9) entre une douille (7) divisée.

3. Dispositif selon la revendication 1 caractérisé en ce que la bague de serrage (1) entoure la douille de serrage (9) à une zone d'extrémité de la douille de serrage (9), près de l'extrémité proche de la douille (7).

4. Dispositif selon l'une des revendications 1 à 3 caractérisé en ce que la bague de serrage (11) comporte un taraudage à un endroit aisément accessible de la surface externe (11a) de la bague de serrage (11), pour le passage et l'action de la vis de serrage (12) sur la surface externe (9a) de la douille de serrage (9), ainsi qu'un levier de serrage court (13) à un autre endroit.

5. Dispositif selon l'une des revendications 1 à 4 caractérisé en ce que le levier de serrage (13) a la forme d'une fourche courte munie d'une plaque intermédiaire (14) qui comporte un taraudage (15) pour le passage et l'action de la vis de serrage (16) contre une butée (17).

6. Dispositif selon l'une des revendications 1 à 5 caractérisé en ce que la douille (7) est fixée sur une console solidaire du carter (18), qui comporte d'une part, la butée (17) de la vis de serrage (16) et grâce à laquelle, d'autre part, tout le dispositif (1) est agençable dans diverses positions à un bâti de la bande transporteuse (2).

7. Dispositif selon l'une des revendications 1 à 6 caractérisé en ce que , dans le cas d'une douille (7) divisée, celle-ci est munie de deux vis d'arrêt (10) alignées, agencées sur chaque partie vers l'axe de pivotement (6).

8. Dispositif selon l'une des revendications 1 à 7 caractérisé en ce que les vis d'arrêt (10) traversent chacune un perçage (7b) au travers de la douille (7) et la vis de serrage (12) traverse un perçage (11b) au travers de la bague de serrage (11), un écrou (10a,12a) muni d'un traraudage correspondant étant soudé sur la surface externe correspondante (7a,11a) coaxialement par rapport au perçage correspondant (7b,11b).

9. Dispositif selon l'une des revendications 1 à 8 caractérisé en ce que le ressort de serrage (23,24,28) consiste en un ressort en caoutchouc ou en matière synthétique à auto-amortissage élevé.

**10.** Dispositif selon l'une des revendications 1 à 9 caractérisé en ce que le ressort en caoutchouc ou en matière synthétique est constitué, de manière connue en soi, par quatre ressorts à barre (23) en caoutchouc ou en matière synthétique agencés entre un tube rectangulaire (21) et un évidement de section rectangulaire (22), dans la douille de serrage (9).

**11.** Dispositif selon l'une des revendications 1 à 9 caractérisé en ce que la surface interne (96) de la douille de serrage (9) ainsi que la surface externe (6a) de l'axe de pivotement (6) présentent des saillies (9c,6b) entre lesquelles un ressort de serrage (24) est coulé par adaptation des formes.

**12.** Dispositif selon l'une des revendications 1 à 11 caractérisé en ce que le ressort de serrage (19) consiste en un ressort en caoutchouc ou en matière synthétique (28) à pouvoir amortissant élevé et en un ressort hélicoïdal (29) en série, serré aux deux extrémités, dont une extrémité (29a) est reliée par adaptation des formes au ressort en caoutchouc ou en matière synthétique (28) et dont l'autre extrémité (29b) est reliée par adaptation des formes de l'axe de pivotement (6).

**13.** Dispositif selon l'une des revendications 1 à 11 caractérisé en ce que le ressort de serrage (19) consiste en un ressort en caoutchouc ou en matière synthétique (24) et en un ressort à torsion, en série avec le ressort (24), constitué par l'axe de pivotement (6).

**14.** Dispositif selon la revendication 13 caractérisé en ce que le ressort à torsion (6) est relié à la potence (3) par l'intermédiaire d'une clavette (27) d'une part, et à une douille (26) par l'intermédiaire d'au moins une clavette (25), d'autre part, celle-ci étant enveloppée par adaptation des formes par ladite douille (26) qui, elle, est reliée par adaptation des formes et moyennant des saillies (26b) au ressort en caoutchouc ou en matière synthétique (24).

**15.** Dispositif selon l'une des revendications 1 à 14 caractérisé en ce que chaque potence rigide (3) comporte, à l'extrémité (3a) opposée à l'axe de pivotement (6), une douille de palier (31) dans laquelle un axe de support (32) portant un profilé de raclage (4) est agencé de façon pivotable et fixable dans une position quelconque, à l'aide d'une vis d'arrêt (34) qui traverse la douille de palier (31).

**16.** Dispositif selon l'une des revendications 1 à 15 caractérisé en ce qu'une extrémité (9d) de la douille de serrage (9) est reliée par adaptation des formes à une aiguille (35) dont l'extrémité (35a) est associée à un cadran fixe (36) solidaire du bâti (18).

Fig.1

Fig.1a

Fig.2

EP 0 663 355 B1

Fig.3

35 7 11 16 7
31 34
38 37
2 4 41
38 41 34 31
33c 37 33b 3b
30 6
7 13 11 16 7 35

Fig.4

Fig.5

Fig.6

EP 0 663 355 B1

**Fig.8**

**Fig.7**

Fig.10

Fig.9

EP 0 663 355 B1

Fig.11

Fig.12

Fig.13

Fig.14

22